# EUROPEAN PATENT SPECIFICATION

(11) **EP 3 319 750 B1**
(45) Date of publication and mention of the grant of the patent: **06.03.2019**
(21) Application number: 16757721.2
(22) Date of filing: 06.07.2016
(51) Int. Cl.: B23G 1/18, B23Q 15/12, G05B 19/416

(54) **PROCEDURE FOR TAPPING METAL NUTS, AS WELL AS MACHINE FOR CARRYING OUT SUCH PROCEDURE**
VERFAHREN ZUM GEWINDEBOHREN VON METALLMUTTERN SOWIE MASCHINE ZUR DURCHFÜHRUNG SOLCH EINES VERFAHRENS
PROCÉDÉ DE TARAUDAGE D'ÉCROUS MÉTALLIQUES, AINSI QUE MACHINE POUR L'EXÉCUTION DE CE PROCÉDÉ

(30) Priority: 10.07.2015 IT UB20152091
(43) Date of publication of application: 16.05.2018
(73) Proprietor: Nippon Tapper Co., Ltd., Tokyo 143-0012 (JP)
(72) Inventor: VESCOVINI, Federico, 33100 Udine (IT)
(74) Representative: Sandri, Sandro
(86) International application number: PCT/IB2016/054032
(87) International publication number: WO 2017/009742

(56) References cited:
- WO-A1-91/03349
- US-A- 5 507 694
- US-A1- 2006 165 502
- US-A1- 2015 081 084
- DU R ET AL: "AUTOMATED MONITORING OF MANUFACTURING PROCESSES, PART 2: APPLICATIONS", TRANSACTIONS OF THE AMERICAN SOCIETY OF MECHANICAL ENGINEERS,SERIES B: JOURNAL OF ENGINEERING FOR INDUSTRY, ASME. NEW YORK, US, vol. 117, no. 2, 1 May 1995 (1995-05-01), pages 133-141, XP000521508, ISSN: 0022-0817

## Description

### TECHNICAL FIELD

This invention relates to a procedure for tapping metal nuts, according to the preamble of independent claim 1, as known from DU, R., ELBESTAWI, M. A. and WU, S. M.: "Automated Monitoring of Manufacturing Processes, Part 2: Applications", Transactions of the American Society of Mechanical Engineers,Series B: Journal of Engineering for Industry, ASME. New York, US, vol.117, no.2, May 1995, pages 133-141, XP000521508, ISSN: 0022-0817. More specifically, this invention relates to a procedure which allows very precise monitoring of the thrust force and speed exerted on each nut placed in contact with a tap designed to form on the nut a predetermined thread as well as the speed and the rotation torque of the chuck on which the tap is mounted, and the speed of return in position of the thrust element, performing an instantaneous adjustment of the various parameters which further take into account the state of wear of the tap. Such a procedure makes it possible to obtain nuts with constant high quality and a number of rejects tending to zero.

The invention also relates to a machine tool according to the preamble of independent claim 9, also known from the above cited document, which is able to implement this procedure for different types of metallic materials, such as steel, aluminium, titanium etc.

The invention applies mainly to the metal industry field and the construction sector in general and, in particular, in the field of making fastening systems with main applications in the automotive, nuclear and aerospace sectors.

### BACKGROUND ART

The prior art procedures for tapping nuts made of steel are generally implemented by means of tapping machines equipped with a chuck on which is rotated a tool called a "tap" designed with a thread to be applied inside the hole provided in each nut. According to a prior art solution the chuck is rotated by an electric motor equipped with an encoder, coupled to the rotary element by a toothed belt or a chain. Moreover, a hydraulic or pneumatic cylinder or a mechanical cam, moved in a translation fashion, carries each nut to the thread at the mouth of the tap, to push it with a predetermined force in such a way that the tap can form the thread, and return quickly to a pre-loading position for positioning a new nut to be threaded. This machine of a conventional type is normally used at an industrial level but has several drawbacks and disadvantages since, with regards to the solution which uses hydraulic or pneumatic cylinders, the adjustment precision is poor, which leads to a non-uniform wear of the taps, that must therefore be frequently replaced, as well as a not completely satisfactory overall quality of the products made, which results in the formation of machining waste. Further, the respective feed and return speeds of the cylinder are not easily adjustable, and this means, in situ, stoppage times possible drops in production rates.

As regards the technical solution which uses a mechanical cam for moving the nut to be threaded, it has several drawbacks and disadvantages since whilst on the one hand the feed precision is accurate on the other hand it is not adjustable as a function of the progressive drop in the cutting capacity of the tap, which leads to a non-uniform wear of the taps, that must therefore be frequently replaced, as well as a not completely satisfactory overall quality of the products made since the process data of the cam are not compared with those of the chuck. Should it then be necessary to optimise the machining process for the tests, for example of a new tool, one is forced to modify the tapping procedure on a product and forced to redesign and make a new cam.

Some machines both with the cam solution and with pneumatic or hydraulic cylinders comprise the application of a sensor which detects any feed faults. However, considerable difficulties are found on these machines for setting up the sensitivity of the sensor between different products processed on the same machine or, for the same product, with a tool with a different cutting capacity such as, for example, in the case of a regenerated tap.

Again, the prior art machines are not able to constantly measure the process data and consequently this data cannot be transmitted and studied *a posteriori* to know and optimise the machining procedure for the various products in relation to the tools used.

Lastly, the prior art machines are not able to monitor in situ the state of wear of the tap, which is normally replaced after failure or when it is no longer able to perform the correct threading of the nut.

### DESCRIPTION OF THE INVENTION

The aim of this invention is to provide a new procedure for tapping nuts made of steel or other metallic material, which allows a constant and high quality of threaded nuts to be maintained, thus tending towards zero or almost zero rejects, as well as reducing to a minimum the number of taps to be replaced.

This is achieved by means of a procedure having the features described in claim 1. The dependent claims describe particularly advantageous embodiments of the procedure according to this invention.

Moreover, the aim of this invention is to provide a machine for tapping metallic elements, in particular but not exclusively metal nuts, which allows a constant and high quality of threaded nuts to be achieved. This is achieved by means of a machine having the features described in claim 9. The claims dependent thereon describe particularly advantageous embodiments of the machine according to this invention.

According to the procedure according to this invention it is possible to adjust very precisely and keep under control the following parameters at any time of the production procedure:
- Speed of the electro-spindle motor on which the tap is mounted;
- Torque of the electro-spindle motor;
- Speed of the feed movement of the nut towards the tap;
- Torque of the feed movement of the nut towards the tap.

According to the procedure according to this invention, certain technical parameters relating to performance of the tapping procedure are adjusted instantaneously following information coming from an extremely high precision movement cylinder, advantageously with magnetic actuation, for moving the nut to be threaded, as well as from the motor which performs the rotation of the chuck, in such a way that the cutting speed and torque of the tap is set instant by instant in relation to the force exerted on the nut by the pusher actuated by the cylinder, the feed speed of the pusher, as well as at the rotation speed and torque of the chuck, as a function of the response of the single nut being processed, that is to say, as a function of the hardness and geometry of the nut.

According to a particularly advantageous embodiment of the procedure according to this invention, the temperature variation in the zone where the tapping operation occurs is also measured. In effect, according to experiments carried out by the Applicant, it has been found how, in the presence of rapid wear of the cutting elements of the tap, the temperature in the area of the tap increases significantly and the quality of the tapping reduces in an equally significant manner. In this context, it has been seen how the gradual removal from the surface of the tap of the surface treatment conventionally called PVD (Physical Vapour Deposition) or another type of surface treatment, which gives the cutting surface of the tap a hardness which is considerably greater than that of the steel of the nut to be threaded, results in a significant increase in the temperature during tapping and this increase causes a further rapid wear of the cutting surface of the tap. For that reason, according to a particularly advantageous embodiment of the invention, the tapping procedure comprises instantaneously monitoring the temperature in the tapping zone in such a way that, where the temperature reaches or exceeds a predetermined threshold, the rotation speed and torque of the chuck are reduced and the temperature is therefore kept constantly below the threshold. In this way, previously unexpected results are obtained, since this causes a longer service life of the PVD coating, a consequent improved cutting capacity and a reduction in the wear of the tap. The procedure according to this invention therefore places in relation the quantity and the quality of the nuts to be threaded with the cutting capacity of the tap instantaneously measured, adapting to the latter parameter the speed and the force of inserting the nut in the tap, as well as the speed of rotation of the tap. The result of the execution of the procedure according to this invention is the achievement of nuts having constant quality, since when the cutting capacity of the tap decreases, the speed of rotation of the tap and insertion of the nut in the tap decreases, whilst the insertion force increases. With reference to the prior art solutions using hydraulic or pneumatic cylinders for moving the nut, it may be noted that the procedure according to this invention makes it possible to obtain the advantage of being able to adjust the feed and return speed of the cylinder, thereby reducing to a minimum the stoppage times and thus achieving an increase in productivity. With reference, on the other hand, to the prior art solution using a cam for moving the nut to be threaded, the procedure according to this invention makes it possible to eliminate the times for changing from one product to another by replacing the cam change with a simple command issued digitally by video by an operator, thereby recalling a pre-set program for the new product to be machined. The costs due to specific tooling for each product are therefore reduced, eliminating totally the cost of the cam.

### DESCRIPTION OF THE DRAWINGS

Other features and advantages of the invention will become clear on reading the description given below of one embodiment, provided as a non-limiting example, with the help of the accompanying drawings, in which:
- Figure 1 is a schematic side view of a first step of the procedure according to this invention, wherein a nut to be threaded is pushed at an adjustable speed by a magnetic cylinder to the mouth of the thread of a rotary tap connected to a chuck;
- Figure 2 is a schematic side view of a second step wherein the nut is pushed along the threading body of the tap with a predetermined thrust, as a function of the torque exerted by the rotation of the chuck, up to a predetermined position;
- Figure 3 is schematic side view of the nut formed in the relative geometry of the thread, which is pushed by the cylinder at a different force for the last threads, giving the finish to the geometry of the nut, as a function of the torque generated by the chuck; and
- Figure 4 is a schematic side view of the backward movement at an adjustable speed of the magnetic cylinder which returns to the starting position and the simultaneously feeding of the nut along the axis of the chuck for the subsequent unloading.

### DESCRIPTION OF AN EMBODIMENT OF THE INVENTION

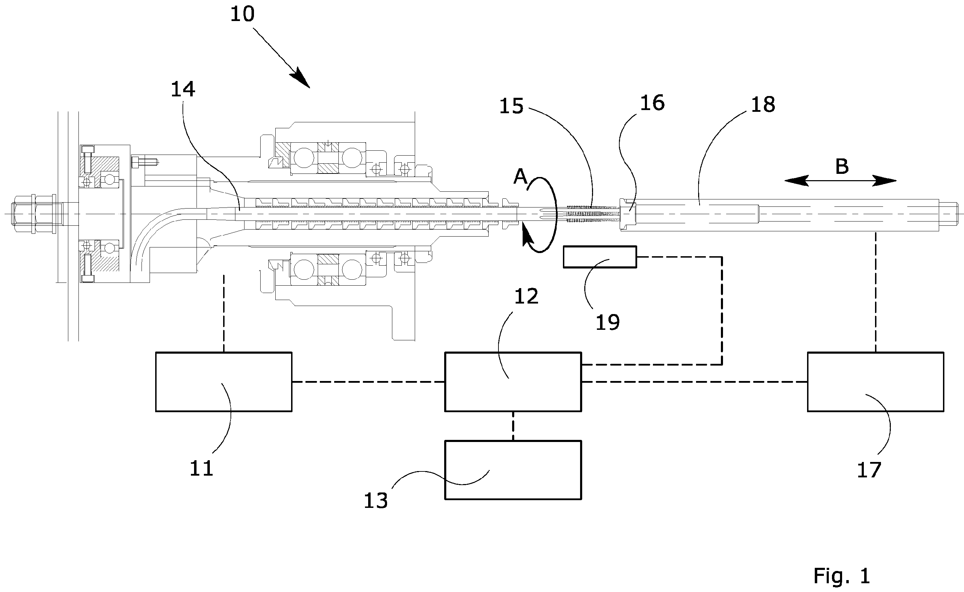

Figure 1 shows a chuck 10 belonging to a tapping machine for making threads on metal nuts, coupled directly or indirectly to a servomotor 11 connected to an electronic control unit 12 equipped with a suitable display 13. On the longitudinal axis 14 of the chuck 10 is rotated (see arrow A) a tap 15 designed with a thread to be applied inside a hole provided in each metal nut 16. The tapping machine may be provided with further devices (not illustrated in the drawings) for the respective loading and unloading of metal nuts 16.

According to the invention, the machine also comprises a cylinder 17 with an extremely high precision of movement, provided with a pusher 18 which acts linearly (see arrow B) along the axis 14 defined by the chuck 10 for pushing a nut 16 against the threading surface of the tap 15 with a predetermined force and speed. The extremely high precision movement cylinder 17 is in turn connected to the above-mentioned electronic control unit of 12.

The definition "extremely high precision" means a possibility of adjusting the feed equal to or greater than +/- 0.01 mm.

Moreover, the extremely high precision movement cylinder 17 advantageously comprises a magnetically actuated cylinder. However, it is possible to also use other types of extremely high precision movement cylinder, provided the cylinder is able to perform movements which can be controlled with a precision of greater than or equal to +/- 0.01 mm.

Lastly, with reference to an advantageous feature of the invention, a temperature sensor, typically an infrared sensor 19, is positioned in the immediate vicinity of the machining zone, that is to say, the zone in which the tap 15 operates to perform the internal threading of the nut 16. The temperature sensor 19 is designed to transmit data to the electronic control unit 12 relating to the instantaneous temperature variation detected.

The procedure according to this invention is described below with reference to Figures 1 to 4.

Figure 1 shows an instantaneous position wherein the nut 16 is pushed at an adjustable speed by the pusher 18 of the cylinder 17 to the initial inlet position on the head of the tap 15.

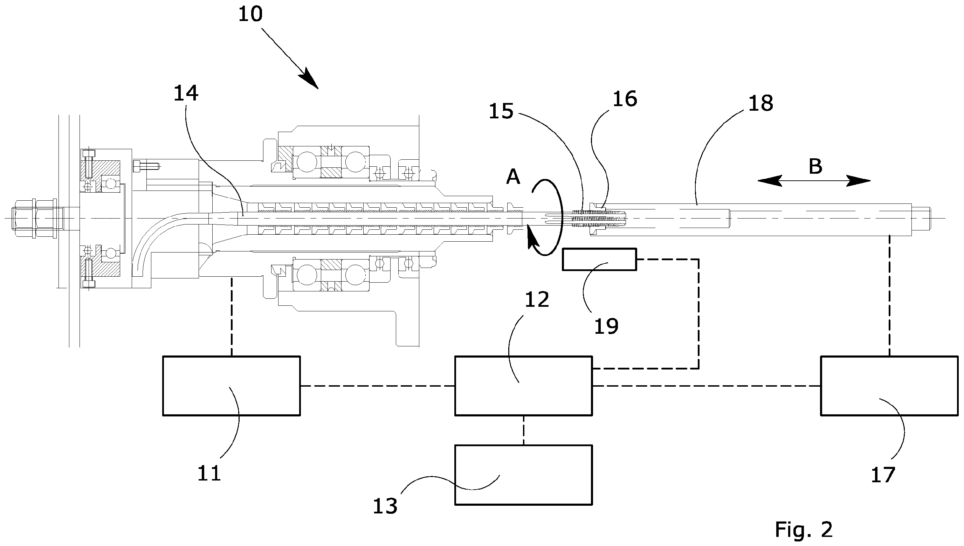

Figure 2 shows a second instantaneous position wherein the nut 16 is pushed by the pusher 18 of the cylinder 17 with a predetermined force and speed along the axis 14, and at the same time the tap rotates at a predetermined speed exerted with a predetermined torque. It is during this step that the actual threading of the nut takes place, and it is during this step that an instantaneous monitoring of the temperature variation by the sensor 19 takes place, this temperature variation being automatically and instantaneously transmitted to the electronic control unit 12.

Again with reference to this step of the procedure, experiments carried out by the Applicant have checked the cutting capacity of the different taps according to various operating conditions. More specifically, it has been seen that when the tap is new, and its the surface treatment conventionally called PVD (Physical Vapour Deposition) or another type of surface treatment, which gives the cutting surface of the tap a hardness which is considerably greater than that of the steel (or, in any case, of the metal) of the nut to be threaded, is also new, the cutting capacity is at a maximum level and remains constant for a certain period of time, and then degrades progressively in a substantially linear manner. After a state of wear of the tap is reached in which the PVD treatment is no longer present on the tap, the cutting capacity reduces drastically. It has surprisingly been found that by keeping the temperature in the operating area below the predetermined limit the PVD treatment is removed much more slowly compared with traditional procedures. More specifically, after fixing an upper temperature limit which must not be exceeded so as not to obtain a drop drastic degrading of the cutting properties of the tap 15, the progressive approach of the working temperature measured by the sensor 19 causes the instantaneous temporary stopping of the machine to allow the cooling of the tap, to prevent the temperature in the operating area from exceeding the upper limit. Consequently, thanks to the constant monitoring of the working temperature and the automatic adjustment of the respective speed of rotation of the tap 15 and for feeding the pusher 18 of the cylinder 17, as well as the thrust force on the nut 16 by the pusher 18, the procedure according to the invention results in the production of threaded nuts with a constant quality, as well as a prolonged cutting capacity, and therefore a prolonged operating life of the taps. However, it should be noted that this mode of performing the procedure, which keeps under control the temperature in the working area of the tap, represents an advantageous embodiment of the procedure according to the invention, and not the main mode which comprises the presence of an extremely high precision movement cylinder, the instantaneous and continuous control of which surprisingly allows important advantages to be achieved compared with the prior art solutions.

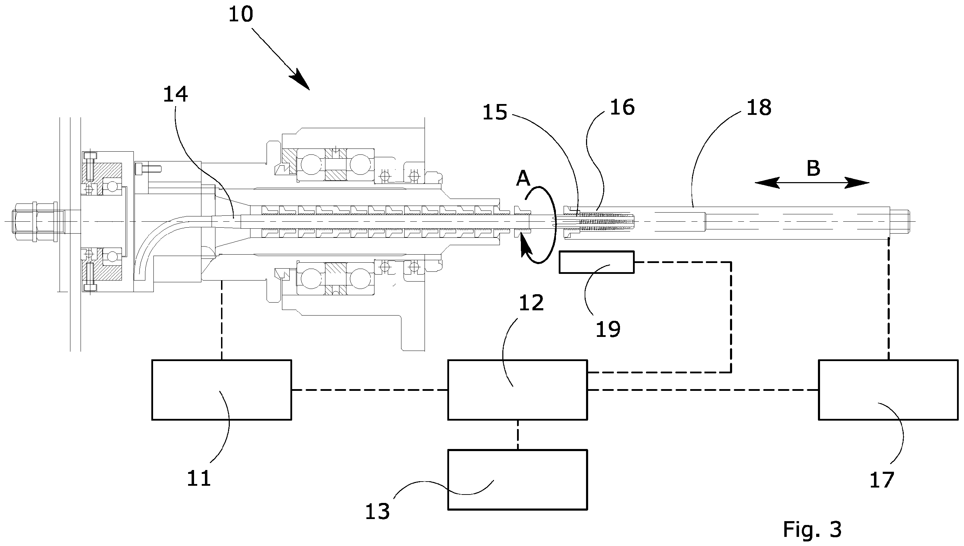

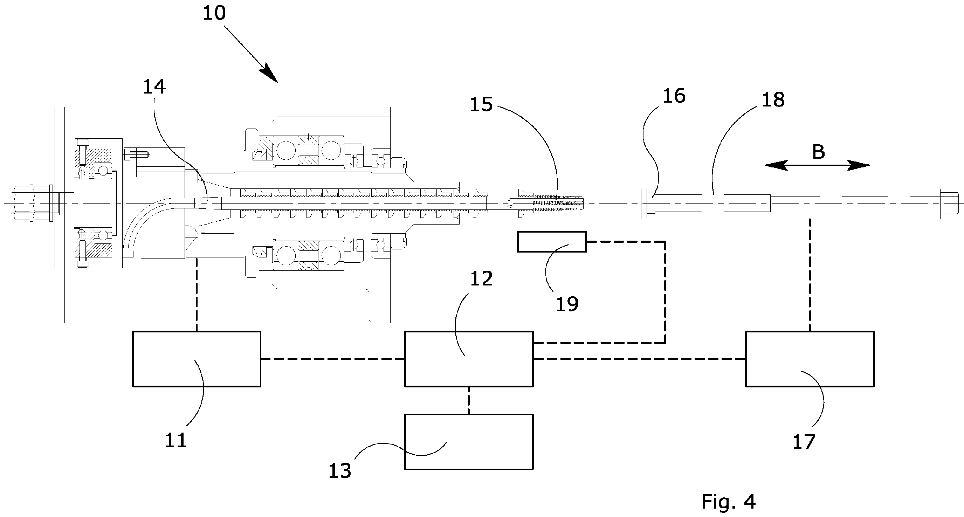

Figure 3 shows a third working position, wherein the nut 16 is still inserted in the tap 15 which continues to rotate, but the pusher 18 of the piston 17 exerts on the nut 16 a different force and has started a return stroke along the axis identified by the arrow B. Il nut 16 completes its stroke along the tap 15 (see Figure 4) and is then feed along the axis 14 to be unloaded. In this position, if the extremely high precision piston 17 is a cylinder with magnetic actuation, and there is the sensor 19 for the instantaneous measurement of the temperature of the tap during machining, depending on the temperature measured by the sensor 19, the magnetic cylinder stops automatically and restarts its cycle as shown in Figure 1 only if the tap has again reached the temperature preset by the operator. During the latter two working steps, the temperature in the working zone is always controlled in an instantaneous manner by the sensor 19, in such a way that the temperature reaches a predetermined lower limit which is used by the electronic control unit 12 to activate a new cycle for threading a new nut 16.

The procedure as described above makes it possible to achieve a series of important advantages compared with the prior art procedures. More specifically, the procedure according to the invention makes it possible to automatically distinguish the performances which can be obtained by a new tap, having, therefore, a maximum cutting capacity, compared with a tap already partly worn in which the cutting capacity progressively decreases, thus maintaining, for example, maximum feed speed of the pusher and minimum feed force of the pusher whilst the tap is new, progressively decreasing the speed and increasing the force during the working life of the tap, taking into account the working temperature of the tap as a reference value. Is in this way possible to measure each parameter which affects the production process (for example, hardness of nut before or after hardening and tempering, height of nut, and therefore quantity of material to be removed, but also geometry of the tap, new or regenerated condition of the tap, and even coolant selected, for example cutting oil or emulsion), in such a way as to perform optimum adjustments in any phase of the life of the cutting tool for any type of product to be threaded.

The procedure according to the invention, which is performed substantially automatically thanks to an appropriate software in the electronic control unit 12, may further be controlled manually and instantaneously by an operator who observes and evaluates on the display unit 13 the processing parameters during execution of the procedure, being able to check the periodic nature of the measurement of the various parameters according to the requirements (from 1 to 30 ms), making corrections as necessary (for example, entering torque limits exerted by the chuck and/or by the cylinder, different minimum and maximum temperatures, or different tap cooling times) by manually entering by means of a separate keyboard or touch screen (not illustrated).

According to a further embodiment, the software also comprises the possibility of sending to a server all the parameters for setting up each machining operation for the particular type of tap used in such a way as to being able to control with the aid of specific graphs the behaviour and the output of the tools for the various production batches.

The invention has been described above with reference to one particular embodiment. It is nevertheless clear that the invention is susceptible to numerous variations which lie within the scope of its disclosure, in the framework of the protection provided by the accompanying claims.

## Claims

1. A procedure for tapping metal elements, in which a tap (15) provided with an external threading is placed in contact with a metal element (16), for realising a threading internally of the element, **characterised by** comprising the following working steps:
a) setting the tap (15) in rotation at a first predetermined velocity that is instantaneously adjustable as well as at a predetermined torque value that is instantaneously adjustable about a longitudinal axis (14) thereof;
b) setting a predetermined thrust that is instantaneously adjustable with very high precision, and therefore with displacements that are adjustable in terms of linear distance travelled equal to or greater than +/- 0.01mm on the metal element (16);
c) a linear advancing of the metal element (16) along the longitudinal axis at a second predetermined velocity instantaneously adjustable such that an inner surface of the metal element (16) is threaded by the tap (15); and
d) an instantaneous and continuous adjustment, with very high precision, of the first velocity, the torque value, the second velocity and the thrust.

2. The procedure of claim 1, wherein the metal element (16) is constituted by a nut made of steel or aluminium or titanium or other metal materials.

3. The procedure according to one of the preceding claims, wherein a following further work step c) is included during carrying-out of steps c) and d) :
c') measuring a temperature of the working zone in which the metal element (16) is threaded by the tap (15);
and wherein step d) is carried out in such a way that the temperature of the working zone does not exceed a predetermined value.

4. The procedure for tapping metal nuts according to claim 2, realised by a tapping machine provided with a rotating chuck (10) at a first predetermined velocity and with a predetermined torque value about an axis (14) on which a tap (15) is mounted provided with an external thread able to tap a metal nut (16) placed in alignment on the axis (14), as well as a cylinder (17) having a very high displacement precision, which therefore enables adjustments in terms of linear distance travelled equal to or greater than +/- 0.01mm, having a mobile pusher (18) in translation along the axis (14) at a second predetermined velocity, and able to exert on the nut (16) a predetermined thrust for advancing the nut (16) to be tapped along the outer tapping surface of the tap, the machine being further provided with an electronic control unit (12) by means of which the values of the first velocity, torque, second velocity and thrust are modified.

5. The procedure of claims 3 and 4, wherein temperature values detected by a sensor (19) arranged in an immediate proximity of the working zone are sent, during working, to the electronic control unit (12), wherein the procedure includes setting a maximum working temperature, and wherein reaching the maximum working temperature determines an automatic reduction of the advancement velocity of the pusher (18) and/or the rotation velocity of the tap (15), and/or an increase in the torque exerted on the tap (15) by means of the rotation of the chuck (10) and/or the thrust exerted on the nut (16) by the pusher (18).

6. The procedure of claim 4, wherein the electronic control unit (12) is provided with a data entry and/or viewing device (13) by means of which the parameters of the procedure are modified.

7. The procedure according to one of claims from 4 to 6, wherein the chuck (10) is actuated by a servomotor (11) having a direct or indirect coupling.

8. The procedure of one of claims from 4 to 7, wherein the cylinder (17) having very high-precision displacement is magnetically actuated.

9. A tapping machine provided with a rotating chuck (10) at a first predetermined velocity and with a predetermined torque value about an axis (14) on which a tap (15) is mounted provided with an external thread able to tap a metal nut (16) placed in alignment on the axis (14), the machine being **characterised by** being also provided with a cylinder (17) having a very high displacement precision, which therefore enables adjustments in terms of linear distance travelled equal to or greater than +/- 0.01mm,having a mobile pusher (18) in translation along the axis (14) at a second predetermined velocity, and able to exert on the nut (16) a predetermined thrust for advancing the nut (16) to be tapped along the outer tapping surface of the tap, the machine being further provided with an electronic control unit (12) by means of which the values of the first velocity, torque, second velocity and thrust are modified.

10. The machine according to claim 9, wherein temperature values detected by a sensor (19) arranged in an immediate proximity of the working zone are sent during working to the electronic control unit (12), the values being used by the electronic control unit (12) for adjusting the values of the first velocity, torque, second velocity and thrust.

11. The machine according to one of claims 9 and 10, wherein the chuck (10) is set in rotation by a servo motor (11) having a direct or indirect coupling.

12. The machine according to one of claims from 9 to 11, wherein the cylinder (17) having very high displacement precision is magnetically actuated.

## Patentansprüche

1. Verfahren zum Innengewindeschneiden von Metallelementen, bei dem ein Gewindeschneider (15), der mit einem Außengewinde versehen ist, in Kontakt mit einem Metallelement (16) gebracht wird, um Gewindeschneiden im Inneren des Elements durchzuführen, wobei das Verfahren **dadurch gekennzeichnet** ist, das es die folgenden Schritte umfasst:
a) In Rotationversetzen des Gewindeschneiders (15) bei einer ersten vorgegebenen, sofort verstellbaren Geschwindigkeit sowie bei einem vorgegebenen, sofort verstellbaren Drehmomentwert um eine Längsachse (14) desselben;
b) Einstellen einer vorgegebenen Schubkraft, die sofort mit sehr hoher Präzision verstellbar ist und deshalb mit Verschiebungen, die in Bezug auf die zurückgelegte lineare Entfernung auf dem Metallelement (16) gleich oder mehr als +/- 0,01 mm verstellbar sind;
c) ein lineares Vorrücken des Metallelements (16) entlang der Längsachse bei einer zweiten vorgegebenen Geschwindigkeit, die sofort verstellbar ist derart, dass eine Innenfläche des Metallelements (16) von dem Gewindeschneider (15) gewindegeschnitten wird, und
d) eine sofortige und kontinuierliche Verstellung mit sehr hoher Präzision der ersten Geschwindigkeit, des Drehmomentwerts, der zweiten Geschwindigkeit und der Schubkraft.

2. Verfahren nach Anspruch 1, wobei das Metallelement (16) aus einer Mutter besteht, die aus Stahl oder Aluminium oder Titan oder anderen Metallwerkstoffen hergestellt ist.

3. Verfahren nach einem der vorhergehenden Ansprüche, wobei ein folgender weiterer Arbeitsschritt c) während der Ausführung der Schritte c) und d) eingeschlossen ist: c') Messen einer Temperatur der Arbeitszone, in der das Metallelement (16) von dem Gewindeschneider (15) gewindegeschnitten wird; und wobei Schritt d) so ausgeführt wird, dass die Temperatur der Arbeitszone einen vorgegebenen Wert nicht überschreitet.

4. Verfahren zum Gewindeschneiden von Metallmuttern nach Anspruch 2, das von einer Gewindeschneidmaschine durchgeführt wird, die mit einem Drehfutter (10) versehen ist, bei einer ersten vorgegebenen Geschwindigkeit und bei einem vorgegebenen Drehmomentwert um eine Achse (14), auf der ein Gewindeschneider (15) montiert ist, der mit einem Außengewinde versehen ist, das imstande ist, eine Metallmutter (16) gewindezuschneiden, die auf der Achse (14) ausgerichtet platziert ist, als auch mit einem Zylinder (17), der eine sehr hohe Verschiebungspräzision aufweist, der deshalb Verstellungen in Bezug auf die lineare zurückgelegte Entfernung gleich oder größer als +/- 0,01 mm ermöglicht, und einen mobilen Schieber (18) in Verschiebung entlang der Achse (14) bei einer zweiten vorgegebenen Geschwindigkeit aufweist und fähig ist, auf die Mutter (16) eine vorgegebene Schubkraft zum Vorrücken der Mutter (16) auszuüben, damit diese entlang der äußeren Gewindeschneidfläche des Gewindeschneiders gewindegeschnitten wird, wobei die Maschine ferner mit einer elektronischen Steuereinheit (12) ausgestattet ist, mit deren Hilfe die Werte der ersten Geschwindigkeit, des Drehmoments, der zweiten Geschwindigkeit und der Schubkraft modifiziert werden.

5. Verfahren nach Anspruch 3 und 4, wobei Temperaturwerte, die von einem Sensor (19) festgestellt werden, der in unmittelbarer Nähe zur Arbeitszone angeordnet ist, während des Arbeitens an die elektronische Steuereinheit (12) geschickt werden, wobei das Verfahren die Einstellung einer maximalen Arbeitstemperatur enthält, und wobei das Erreichen der maximalen Arbeitstemperatur eine automatische Reduktion der Vorschubgeschwindigkeit des Schiebers (18) und/oder der Rotationsgeschwindigkeit des Gewindeschneiders (15) und/oder eine Erhöhung des Drehmoments bestimmt, das auf den Gewindeschneider (15) durch die Rotation des Futters (10) ausgeübt wird, und/oder die Schubkraft, die auf die Mutter (16) von dem Schieber (18) ausgeübt wird.

6. Das Verfahren nach Anspruch 4, wobei die elektronische Steuereinheit (12) mit einer Dateneingabe- und/oder Betrachtungsvorrichtung (13) versehen ist, mit deren Hilfe die Parameter des Verfahrens modifiziert werden.

7. Verfahren nach einem der Ansprüche von 4 bis 6, wobei das Futter (10) von einem Servomotor (11) aktiviert wird, der eine direkte oder indirekte Kupplung hat.

8. Verfahren nach einem der Ansprüche von 4 bis 7, wobei der Zylinder (17), der Verschiebung mit sehr hoher Präzision aufweist, magnetisch betätigt wird.

9. Gewindeschneidmaschine, die mit einem Drehfutter (10) mit einer ersten vorgegebenen Geschwindigkeit und mit einem vorgegebenen Drehmomentwert um eine Achse (14) versehen ist, auf der ein Gewindeschneider (15) montiert ist, der mit einem Außengewinde versehen ist, das imstande ist, eine Metallmutter (16) gewindezuschneiden, die in Ausrichtung auf der Achse (14) platziert ist, wobei die Maschine **dadurch gekennzeichnet ist, dass** sie ebenfalls mit einem Zylinder (17) versehen ist, der eine sehr hohe Verschiebungspräzision aufweist, die daher in Bezug auf zurückgelegte lineare Entfernung Verstellungen gleich oder größer als +/- 0,01 mm ermöglicht, und einen mobilen Schieber (18) in Verschiebung entlang der Achse (14) bei einer zweiten vorgegebenen Geschwindigkeit aufweist und imstande ist, auf die Mutter (16) eine vorgegebene Schubkraft auszuüben, um die Mutter (16) vorzurücken, damit diese entlang der äußeren Gewindeschneidfläche des Gewindeschneiders gewindegeschnitten wird, wobei die Maschine ferner mit einer elektronischen Steuereinheit (12) versehen ist, mit deren Hilfe die Werte der ersten Geschwindigkeit, des Drehmoments, der zweiten Geschwindigkeit und der Schubkraft modifiziert werden.

10. Maschine nach Anspruch 9, wobei Temperaturwerte, die von einem Sensor (19) festgestellt werden, der in unmittelbarer Nähe zur Arbeitszone angeordnet ist, während des Arbeitens an die elektronische Steuereinheit (12) geschickt werden, wobei die Werte von der elektronischen Steuereinheit (12) benutzt werden, um die Werte der ersten Geschwindigkeit, des Drehmoments, der zweiten Geschwindigkeit und der Schubkraft zu verstellen.

11. Maschine nach einem der Ansprüche 9 und 10, wobei das Futter (10) von einem Servomotor (11), der eine direkte oder indirekte Kupplung hat, in Rotation versetzt wird.

12. Maschine nach einem der Ansprüche von 9 bis 11, wobei der Zylinder (17), der eine sehr hohe Verschiebungspräzision hat, magnetisch betätigt wird.

## Revendications

1. Procédé de taraudage d'éléments métalliques, dans lequel un taraud (15) muni d'un filetage extérieur est mis en contact avec un élément métallique (16), pour réaliser un filetage à l'intérieur de l'élément, **caractérisé en ce qu'**il comprend les étapes de travail suivantes :
a) mettre le taraud (15) en rotation à une première vitesse prédéterminée réglable instantanément ainsi qu'à une valeur de couple prédéterminée réglable instantanément autour d'un axe longitudinal (14) de celui-ci ;
b) appliquer une poussée prédéterminée réglable instantanément avec une très grande précision, et donc avec des déplacements réglables en termes de distance linéaire parcourue supérieure ou égale à +/- 0,01 mm sur l'élément métallique (16) ;
c) avancer linéairement l'élément métallique (16) le long de l'axe longitudinal à une deuxième vitesse prédéterminée réglable instantanément de sorte qu'une surface intérieure de l'élément métallique (16) soit filetée par le taraud (15) ; et
d) régler instantanément et en continu, avec une très grande précision, la première vitesse, la valeur de couple, la deuxième vitesse et la poussée.

2. Procédé selon la revendication 1, dans lequel l'élément métallique (16) est constitué par un écrou en acier ou en aluminium ou en titane ou en d'autres matériaux métalliques.

3. Procédé selon l'une des revendications précédentes, dans lequel une autre étape de travail suivante c) est incluse lors de la mise en oeuvre des étapes c) et d) :
C') mesurer une température de la zone de travail dans laquelle l'élément métallique (16) est fileté par le taraud (15) ;
et dans lequel l'étape d) est mise en oeuvre de manière que la température de la zone de travail ne dépasse pas une valeur prédéterminée.

4. Procédé de taraudage d'écrous métalliques selon la revendication 2, réalisé par une machine de taraudage pourvue d'un mandrin rotatif (10) à une première vitesse prédéterminée et avec une valeur de couple prédéterminée autour d'un axe (14) sur lequel est monté un taraud (15) pourvu d'un filetage extérieur apte à tarauder un écrou métallique (16) aligné sur l'axe (14), et d'un cylindre (17) ayant une précision de déplacement très élevée, ce qui permet donc des réglages en termes de distance linéaire parcourue supérieure ou égale à +/- 0,01 mm, ayant un poussoir mobile (18) en translation le long de l'axe (14) à une deuxième vitesse prédéterminée, et capable d'exercer sur l'écrou (16) une poussée prédéterminée pour avancer l'écrou (16) à tarauder le long de la surface de taraudage extérieure du taraud, la machine étant en outre munie d'une unité de commande électronique (12) au moyen de laquelle les valeurs de la première vitesse, du couple, de la deuxième vitesse et de la poussée sont modifiées.

5. Procédé selon les revendications 3 et 4, dans lequel les valeurs de température détectées par un capteur (19) disposé à proximité immédiate de la zone de travail sont envoyées, pendant le travail, à l'unité de commande électronique (12), le procédé comprenant le réglage d'une température maximale de fonctionnement, et dans lequel le fait d'atteindre la température maximale de fonctionnement détermine une réduction automatique de la vitesse d'avancement du poussoir (18) et/ou de la vitesse de rotation du taraud (15), et/ou une augmentation du couple exercé sur le taraud (15) par la rotation du mandrin (10) et/ou de la poussée exercée sur l'écrou (16) par le poussoir (18).

6. Procédé selon la revendication 4, dans lequel l'unité de commande électronique (12) est munie d'un dispositif d'entrée et/ou de visualisation de données (13) au moyen duquel les paramètres du procédé sont modifiés.

7. Procédé selon l'une des revendications 4 à 6, dans lequel le mandrin (10) étant actionné par un servomoteur (11) ayant un accouplement direct ou indirect.

8. Procédé selon l'une des revendications 4 à 7, dans lequel le cylindre (17) ayant un déplacement de très haute précision est actionné magnétiquement.

9. Machine à tarauder munie d'un mandrin rotatif (10) à une première vitesse prédéterminée et avec une valeur de couple prédéterminée autour d'un axe (14) sur lequel est monté un taraud (15) muni d'un filetage extérieur apte à tarauder un écrou métallique (16) aligné sur l'axe (14), la machine étant **caractérisée en ce qu'**elle est également munie d'un cylindre (17) ayant une précision de déplacement très élevée, ce qui permet donc des réglages en termes de distance linéaire parcourue supérieure ou égale à +/- 0,01 mm, ayant un poussoir mobile (18) en translation le long de l'axe (14) à une deuxième vitesse prédéterminée, et capable d'exercer sur l'écrou (16) une poussée prédéterminée pour avancer l'écrou (16) à tarauder le long de la surface de taraudage extérieur du taraud, la machine étant en outre munie d'une unité de commande électronique (12) au moyen de laquelle les valeurs de la première vitesse, du couple, de la deuxième vitesse et de la poussée sont modifiées.

10. Machine selon la revendication 9, dans laquelle les valeurs de température détectées par un capteur (19) disposé à proximité immédiate de la zone de travail sont envoyées pendant le travail à l'unité de commande électronique (12), les valeurs étant utilisées par l'unité de commande électronique (12) pour régler les valeurs de la première vitesse, du couple, de la deuxième vitesse et de la poussée.

11. Machine selon l'une des revendications 9 et 10, dans laquelle le mandrin (10) est mis en rotation par un servomoteur (11) ayant un accouplement direct ou indirect.

12. Machine selon l'une des revendications 9 à 11, dans laquelle le cylindre (17) ayant une précision de déplacement très élevée est actionné magnétiquement.
